(19) Europäisches Patentamt
European Patent Office
Office européen des brevets

(11) **EP 4 779 270 A1**

(12) **EUROPÄISCHE PATENTANMELDUNG**

(43) Veröffentlichungstag:
22.07.2026 Patentblatt 2026/30

(21) Anmeldenummer: 26151984.7

(22) Anmeldetag: **15.01.2026**

(51) Internationale Patentklassifikation (IPC):
*G01F 1/66* (2022.01)        *G01F 1/667* (2022.01)

(52) Gemeinsame Patentklassifikation (CPC):
**G01F 1/662; G01F 1/667; G01F 1/668**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **16.01.2025   DE 102025101416**

(71) Anmelder: **Krohne AG**
**4019 Basel (CH)**

(72) Erfinder:
• **Massaad, Jack**
**3328 AJ Dordrecht (NL)**
• **Hogendoorn, Cornelis Johannes**
**4211 BG Spijk (NL)**
• **Vogt, Michael**
**44797 Bochum (DE)**

(74) Vertreter: **Gesthuysen Patentanwälte Partnerschaftsgesellschaft mbB**
**Huyssenallee 68**
**45128 Essen (DE)**

(54) **ULTRASCHALLDURCHFLUSSMESSGERÄT UND VERFAHREN ZUM BETREIBEN EINES ULTRASCHALLDURCHFLUSSMESSGERÄTS**

(57)   Beschrieben und dargestellt ist ein Ultraschall-durchflussmessgerät (2), umfassend ein Messrohr, ein erstes Ultraschallwandlerarray, ein zweites Ultraschallwandlerarray und eine Steuer- und Auswerteeinheit, wobei im Betrieb ein Medium durch das Messrohr fließt, wobei das erste Ultraschallwandlerarray und das zweite Ultraschallwandlerarray in Strömungsrichtung gesehen beabstandet zueinander an dem Messrohr angeordnet sind, wobei die Steuer- und Auswerteeinheit mit dem ersten Ultraschallwandlerarray und mit zweiten Ultraschall-wandlerarray verbunden ist, wobei in einem ersten Betriebszustand das erste Ultraschallwandlerarray zumindest als Ultraschallerreger zur Anregung einer (geführten) Ultraschallwelle, die sich im Betrieb durch das Medium ausbereitet, ausgebildet ist und wobei das zweite Ultraschallwandlerarray zumindest als Ultraschallempfänger zum Empfang dieser Ultraschallwelle ausgebildet ist,
**dadurch gekennzeichnet**
dass das erste Ultraschallwandlerarray eine Mehrzahl von Wandlerelementen aufweist, wobei die Mehrzahl von Wandlerelementen auf einem ersten Messrohrumfang angeordnet ist, dass das zweite Ultraschallwandlerarray eine Mehrzahl von Wandlerelementen aufweist, wobei die Mehrzahl von Wandlerelementen auf einem zweiten Messrohrumfang angeordnet ist und dass die Wandlerelemente klein sind im Vergleich zum Messrohrumfang.

Fig. 1

EP 4 779 270 A1

**Beschreibung**

Die Erfindung geht aus von einem Ultraschalldurchflussmessgerät, umfassend ein Messrohr, ein erstes Ultraschallwandlerarray, ein zweites Ultraschallwandlerarray und eine Steuer- und Auswerteeinheit,

wobei im Betrieb ein Medium durch das Messrohr fließt,

wobei das erste Ultraschallwandlerarray und das zweite Ultraschallwandlerarray in Strömungsrichtung des fließenden Mediums gesehen beabstandet zueinander an dem Messrohr angeordnet sind,

wobei die Steuer- und Auswerteeinheit mit dem ersten Ultraschallwandlerarray und mit dem zweiten Ultraschallwandlerarray verbunden ist,

wobei in einem ersten Betriebszustand das erste Ultraschallwandlerarray zumindest als Ultraschallerreger zur Anregung einer geführten Ultraschallwelle, die sich im Betrieb durch das Medium ausbereitet, ausgebildet ist und wobei das zweite Ultraschallwandlerarray zumindest als Ultraschallempfänger zum Empfang dieser Ultraschallwelle ausgebildet ist.

Darüber hinaus betrifft die Erfindung ein Verfahren zum Betreiben eines erfindungsgemäßen Ultraschalldurchflussmessgeräts, wobei ein Medium durch das Messrohr fließt,
und wobei in einem ersten Betriebszustand das erste Ultraschallwandlerarray als Ultraschallerreger funktioniert und das zweite Ultraschallwandlerarray als Ultraschallempfänger funktioniert und wobei in einem zweiten Betriebszustand das erste Ultraschallwandlerarray als Ultraschallempfänger funktioniert und das zweite Ultraschallwandlerarray als Ultraschallerreger funktioniert.

Ultraschalldurchflussmessgeräte, die Ultraschallwandlerarrays zur Aussendung und zum Empfang eines Ultraschallsignals aufweisen, sind aus dem Stand der Technik bekannt.

Ebenfalls bekannt ist es, im Messrohr eine geführte Ultraschallwelle anzuregen, die sich entlang der Messrohrachse ausbreitet. Beispielsweise ist es bekannt eine solche Ultraschallwelle mit einem Piezoring, der das Messrohr umgibt, anzuregen und mit einem zweiten Piezoring, der das Messrohr ebenfalls umgibt, zu empfangen. Die Druckschrift US 10,365,137 B2 offenbart ein Ultraschalldurchflussmessgerät, wobei an einem Messrohr ein erster Ultraschallwandler in Form eines in wenigstens zwei Teile unterteilten ersten Piezorings und ein zweiter Ultraschallwandler in Form eines in wenigstens zwei Teile unterteilten zweiten Piezorings angeordnet sind. Im Betrieb können die wenigstens zwei Teile des ersten Piezorings zusammen angesteuert werden, um eine Ultraschallwelle im Messrohr anzuregen. Durch die Unterteilung in zwei oder drei separate Teile können Schwankungen der Messrohrdimensionen ausgeglichen werden.

Ausgehend vom dargelegten Stand der Technik ist es Aufgabe der vorliegenden Erfindung, ein Ultraschalldurchflussmessgerät anzugeben, das eine besonders gute Vermessung des Mediums gewährleistet. Zudem ist es Aufgabe der Erfindung ein Verfahren zum Betreiben eines Ultraschalldurchflussmessgeräts anzugeben, mit dem das strömende Medium besonders gut vermessen werden kann.

Gemäß einer ersten Lehre der vorliegenden Erfindung wird die zuvor genannte Aufgabe dadurch gelöst, dass das erste Ultraschallwandlerarray eine Mehrzahl von Wandlerelementen aufweist, wobei die Mehrzahl von Wandlerelementen auf einem ersten Messrohrumfang angeordnet ist,

dass das zweite Ultraschallwandlerarray eine Mehrzahl von Wandlerelementen aufweist, wobei die Mehrzahl von Wandlerelementen auf einem zweiten Messrohrumfang angeordnet ist

und dass die Wandlerelemente klein sind im Vergleich zum Messrohrumfang.

Die Wandlerelemente des ersten Ultraschallwandlerarrays sind derart auf bzw. entlang eines Messrohrumfangs angeordnet, dass sie im Betrieb eine Druckverteilung im Messrohr anregen, die sich als geführte Ultraschallwelle im Inneren des Messrohrs in Richtung des zweiten Ultraschallwandlerarrays fortsetzt. Das durch das erste Ultraschallwandlerarray angeregte Ultraschallwellenfeld breitet sich im Messrohr als geführte Welle aus.

Die Wandlerelemente eines Ultraschallwandlerarrays können gemäß einer Ausgestaltung parallel zusammen angesteuert werden. Gemäß einer alternativen Ausgestaltung sind die Wandlerelemente derart kontaktiert, dass wenigstens zwei Wandlerelemente, vorzugsweise alle Wandlerelemente separat angesteuert werden können.

Durch die Möglichkeit, die einzelnen Wandlerelemente separat anzusteuern, können grundsätzlich unterschiedliche Druckverteilung in das Medium eingebracht und insofern unterschiedliche Ultraschallwellen bzw. unterschiedliche Wellenmoden angeregt werden. Zudem kann eine separate Ansteuerung, wie weiter unten noch ausführlich erläutert wird, dazu genutzt werden Schwankungen, beispielsweise von Messrohrdimensionen auszugleichen.

Vorzugsweise wird durch die Wandlerelemente des als Ultraschallerreger arbeitenden Ultraschallwandlerarrays ein ebenes Ultraschallwellenfeld angeregt, dessen Wellenfront im Wesentlichen den inneren Durchmesser des Messrohrs ausfüllt und insofern das gesamte Strömungsprofil berücksichtigt. Diese Ausgestaltung weist den Vorteil auf, dass bei der Bestimmung der Laufzeit dieser Welle und bei der anschließenden Bestimmung der Geschwindigkeit des strömenden Mediums alle Geschwindigkeitskomponenten des Strömungsprofils mit einer Laufzeitmessung berücksichtigt werden können.

Erfindungsgemäß wurde erkannt, dass die Anregung und auch der Empfang einer solchen ebenen Wellenfront besonders gut mit Hilfe von zwei an dem Messrohr angeordneten Ultraschallwandlerarrays realisiert werden kann.

Das erfindungsgemäße Messrohr weist einen äußeren Messrohrumfang auf, der bei Betrachtung des Messrohrquerschnitts durch die äußere Messrohrwand definiert wird. Weiterhin weist das Messrohr einen inneren Messrohrumfang auf, der bei Betrachtung des Messrohrquerschnitt durch die innere Messrohrwand definiert wird.

Wenn es heißt, dass die Wandlerelemente auf einem Messrohrumfang angeordnet sind, so ist damit gemeint, dass die Wandlerelemente auf dem äußeren Messrohrumfang angeordnet sein können oder auf dem inneren Messrohrumfang, und damit im Inneren des Messrohrs angeordnet sein können. Zudem umfasst dieser Wortlaut ebenfalls Ausgestaltungen, nach denen beispielsweise eine Kopplungsschicht oder eine andere Schicht, die zur Anordnung der Wandlerelemente am Messrohr genutzt wird, zwischen der inneren bzw. äußeren Messrohrwand und den Wandlerelementen vorhanden sein kann.

Das Messrohr kann Teil einer bestehenden Rohranlage sein oder ein Messrohr, dass mit den Rohren einer Rohranlage, beispielsweise über eine Flanschverbindung, verbunden werden kann, oder das Messrohr kann ein Messrohreinsatz sein, der in ein Rohr einer bestehenden Anlage eingesetzt werden kann.

Zur Realisierung einer ebenen Wellenfront werden die Wandlerelemente im Betrieb vorzugsweise derart angesteuert, dass die Wellenlänge der Ultraschallwelle im Wesentlichen dem inneren Durchmesser des Messrohrs entspricht.

In Abhängigkeit von unterschiedlichen Parametern, wie Mediumparametern, der Frequenz der angeregten Ultraschallwelle, und Randbedingungen des Messrohrs, wie beispielsweise dem Messrohrdurchmesser, sind unterschiedliche Wellenmoden im Messrohr ausbreitungsfähig. Zudem können verschiedene Wellenmoden im Medium durch die Ansteuerung der Wandlerelemente angeregt werden.

Wenn es heißt, dass die einzelnen Wandlerelemente klein ausgebildet sind im Vergleich zum Messrohrumfang, so ist damit gemäß einer Ausgestaltung gemeint, dass die Ausdehnung eines Wandlerelementes in Richtung des Messrohrumfangs kleiner ist als ein Viertel des Messrohrumfangs. Vorzugsweise ist die Ausdehnung eines Wandlerelementes in Richtung des Messrohrumfangs kleiner als ein Achtel des Messrohrumfangs, besonders bevorzugt ist die Ausdehnung in Richtung des Messrohrumfangs kleiner als ein Sechtel des Messrohrumfangs. Gemäß einer Ausgestaltung liegt die Größe der Wandlerelemente im μm-Bereich oder im mm-Bereich oder im cm-Bereich.

Beispielsweise beträgt der Durchmesser eines Wandlerelements, das im Wesentlichen scheibenförmig ausgebildet ist und eine kreisförmige Grundfläche aufweist zwischen 50 μm und 350 μm und die Dicke eines solchen Wandlerelementes beträgt zwischen 0,5 μm und 3 μm.

Gemäß einer Ausgestaltung liegt der Durchmesser des Messrohrs zwischen 1 und 10 mm. Besonders bevorzugt beträgt die Größe der Wandlerelemente, also beispielsweise der Durchmesser einer im Wesentlichen kreisförmigen Grundfläche, zwischen 0,5 und 5 mm. Liegt der Durchmesser des Messrohrs zwischen 1 und 10 cm, beträgt die Größe der Wandlerelemente, also beispielsweise der Durchmesser einer im Wesentlichen kreisförmigen Grundfläche, zwischen 1 und 5 cm.

Gemäß einer nächsten Ausgestaltung beträgt die Wanddicke der Messrohrs zwischen 1 mm und 10 mm.

Gemäß einer nächsten bevorzugten Ausgestaltung sind die Wandlerelemente derart ausgebildet und entlang des Messrohrumfangs angeordnet, dass die Gesamtfläche der Wandlerelemente wenigstens 50 % des Messrohrumfangs abdecken. Dabei entspricht die Gesamtfläche Wandlerelemente der Summe der einzelnen Flächen der Wandlerelemente im Querschnitt, und zwar im Bereich des ersten Messrohrumfangs betrachtet.

Besonders bevorzugt decken die Wandlerelemente mehr als 50 %, beispielweise mehr als 60 % oder mehr als 70 % des Messrohrumfangs ab. Besonders bevorzugt sind die Wandlerelemente dabei achsensymmetrisch in Bezug auf die Längsachse des Messrohrs angeordnet.

Inbesondere sind die Wandlerelement in Abhängigkeit des Messrohrumfangs derart dimensioniert, dass die Wandlerelemente im montierten Zustand vollflächigen Kontakt mit der inneren oder äußeren Messrohrwand oder falls vorhanden der Zwischenschicht zwischen den Wandlerelementen und der inneren oder äußeren Messrohrwand aufweisen.

Die erfindungsgemäße Vorrichtung wird also gemäß einer Ausgestaltung bei kleinen Messrohrdimensionen eingesetzt. Die Erfindung ist jedoch keinesfalls darauf beschränkt. Ein Einsatz dieser Anordnung bei größeren Messrohrdurchmessern insbesondere mit größeren Wandlerelementen ist ebenso denkbar und vorteilhaft.

Beispielsweise können die Wandlerelemente scheibenförmig ausgebildet sein, wobei der Durchmesser der kreisförmigen Grundfläche eines Wandlerelements beispielsweise zwischen 1 und 10 mm oder zwischen 1 und 10 cm liegt. Denkbar ist ebenfalls, dass die Wandlerelemente, insbesondere bei großen Durchmessern der Messrohre noch größer ausgebildet sind.

Zudem können die Wandlerelemente auch quaderförmig mit rechteckiger Grundfläche ausgebildet sein.

Vorzugsweise sind die quaderförmigen Wandlerelemente derart auf einem Messrohrumfang angeordnet, dass die längere Seite des Rechtecks sich in bzw. entgegen der Fließrichtung des Mediums erstreckt.

Erfindungsgemäß ist am Messrohrumfang im Unterschied zum Stand der Technik also kein unterbrochener Piezoring angeordnet, sondern ein Ultraschallwandlerarray mit, vorzugsweise separat ansteuerbaren, Wandlerelementen. Das Ultraschallwandlerarray kann eindimensional oder zweidimensional ausgebildet sein. Genauere Ausgestaltung werden im Weiteren noch beschrieben.

Die Anordnung einer Mehrzahl von separat ansteuerbaren Wandlerelementen entlang des Messrohrumfangs weist den Vorteil auf, dass alle Wandlerelemente oder auch nur einige Wandlelemente, insbesondere Gruppen von Wandlerelementen, angesteuert werden können. Durch eine derart flexible Ansteuerung können unterschiedliche Druckverteilungen und insofern unterschiedliche Wellenmoden im Messrohr angeregt werden. Zudem weist die Ausgestaltung des Ultraschallempfängers als Array aus Wandlerelementen, die entlang des zweiten Messrohrumfangs angeordnet sind, den Vorteil auf, dass mit allen Wandlerelemente oder auch mit nur bestimmten Wandlerelementen das sich im Messrohr ausbreitende Ultraschallwellenfeld erfasst werden kann, sodass die gewünschte Wellenmode durch selektives Erfassen des Ultraschallwellenfeldes mit festgelegten Wandlerelementen herausgefiltert werden kann.

Weiterhin können durch die selektive Erfassung des Ultraschallwellenfeldes mit nur bestimmten Wandlerelementen Störanteile, die beispielsweise auf ungewollte Reflexionen der Ultraschallwelle an der Messrohrwand oder auf sich in der Messrohrwand ausbreitende Signalanteile zurückzuführen sind, dadurch unterdrückt werden, dass die Wandlerelemente, auf die diese Störanteile treffen, kein Signal an die Steuer- und Auswerteeinheit weiterleiten.

Das erste Ultraschallwandlerarray und/oder das zweite Ultraschallwandlerarray ist bzw. sind vorzugsweise als Array aus PMUT (piezoelectric micromachined ultrasonic transducer)-Wandlerelementen oder als Array aus CMUT (capacitive micromachined ultrasonic transducer)-Wandlerelementen oder als Array aus PVdF (Polyvinylidenfluorid)-Wandlerelementen ausgebildet.

Besonders bevorzugt sind das erste Ultraschallwandlerarray und das zweite Ultraschallwandlerarray identisch hinsichtlich der Anzahl der Wandlerelemente und/oder der Anordnung der Wandlerelemente am jeweiligen Messrohrumfang und/oder hinsichtlich der Größe der Wandlerelemente ausgestaltet.

Weiterhin ist es bevorzugt, wenn eine definierte Anzahl an Wandlerelementen des ersten Ultraschallwandlerarrays derart angesteuert wird, dass eine ebene Wellenfront im Medium angeregt wird, und wenn die die Wellenfront erfassenden Wandlerelemente des zweiten Ultraschallwandlerarrays in Bezug auf die Anzahl und der Anordnung am Messrohrumfang den Wandlerelementen des ersten Ultraschallwandlerarrays entsprechen.

Die einzelnen Wandlerelemente sind gemäß einer bevorzugten Ausgestaltung als Piezoelemente ausgebildet.

Die einzelnen Wandlerelemente sind vorzugsweise derart ausgebildet und kontaktiert, dass sie im Betrieb im Dickenmodus schwingen, um im Messrohr eine Ultraschallwelle anzuregen oder zu erfassen. D.h. die einzelnen Wandlerelemente schwingen in Richtung des elektrischen Feldes, das zur Ansteuerung an die Wandlerelemente angelegt wird, wenn die einzelnen Wandlerelemente im Wesentlichen zylinderförmig oder quaderförmig ausgebildet sind und die Wandlerelemente an den Grundflächen kontaktiert sind. Insbesondere sind die Wandlerelemente derart an dem Messrohrumfang, beispielsweise auf der äußeren Messrohrwand oder an der inneren Messrohrwand angeordnet, dass die einzelnen Wandlerelemente senkrecht zur äußeren Messrohrwand bzw. zur inneren Messrohrwand schwingen.

Gemäß einer bevorzugten Ausgestaltung sind die Wandlerelemente des ersten Ultraschallwandlerarrays auf einem flexiblen Band, das um das Messrohr gelegt ist, angeordnet. Besonders bevorzugt ist es, wenn die Wandlerelemente im Wesentlichen äquidistant zueinander auf dem Band angeordnet sind. Eine äquidistante Anordnung der Wandlerelemente auf dem Band gewährleistet ebenso eine gleichmäßige Anordnung der Wandlerelemente entlang des Messrohrumfangs, sodass in der Folge auch das Ultraschallsignal im Messrohr besonders gleichmäßig angeregt werden kann.

Beispielsweise ist ein flexibles Band ein elastisch oder plastisch verformbares Band, das um das Messrohr gelegt werden kann. Insbesondere ist das flexible Band nicht starr sondern biegsam.

Zudem sind vorzugsweise die Wandlerelemente des zweiten Ultraschallwandlerarrays auf einem flexiblen Band, das um das Messrohr gelegt ist, angeordnet. Auch diese Wandler sind in besonders vorteilhafter Weise im Wesentlichen äquidistant zueinander auf dem flexiblen Band angeordnet.

Im montierten Zustand ist gemäß einer Ausgestaltung das flexible Band zwischen den Wandlerelementen und dem Messrohr angeordnet. Gemäß einer alternativen Ausgestaltung ist das flexible Band im montierten Zustand auf der dem Messrohr abgewandten Seite der Wandlerelemente angeordnet. Gemäß dieser Ausgestaltung weisen die Wandlerelemente unmittelbaren Kontakt mit der äußeren oder inneren Messrohrwand auf. Gemäß einer weiteren Ausgestaltung ist zwischen den Wandlerelementen und der äußeren oder inneren Messrohrwand eine akustische Kopplungsschicht angeordnet.

Ist das flexible Band im montierten Zustand zwischen den Wandlerelementen und dem Messrohr angeordnet, kann das flexible Band als akustische Kopplungsschicht ausgebildet sein.

Besonders bevorzugt werden die Wandlerelemente zunächst, also vor der Montage am Messrohr, vorzugsweise in einer Reihe, auf dem flexiblen Band angeordnet. Gemäß einer anderen Ausgestaltung sind die Wandlerelemente als zweidimensionales Array auf dem flexiblen Band angeordnet. Beispielsweise können die Wandlerelemente in zwei oder mehr Reihen auf dem Band angeordnet werden, bevor das Band um das Messrohr gelegt wird. Beispielsweise werden die Wandlerelemente auf das Band geklebt oder gelötet.

Anschließend wird das Band um das Messrohr gelegt oder in das Messrohrinnere eingebracht und an dem Messrohr fixiert. Dabei wird das Band derart um das Messrohr gelegt, dass die Wandlerelemente entlang des Messrohrumfangs angeordnet sind. Vorzugsweise sind die Wandlerelemente derart ausgebildet und angeordnet, dass sie wenigstens 50 % des Messrohrumfangs abdecken. Die Anordnung auf einem solchen flexiblen Band weist den Vorteil auf, dass ein solches Band an verschiedenen Messrohren, die sich im Durchmesser unterscheiden, angeordnet werden kann. Insofern kann ein solches Band mit Wandlerelementen besonders flexibel eingesetzt werden.

Alternativ kann ein solches Band auch im Inneren des Messrohrs befestigt werden. Gemäß einer Ausgestaltung kann ein solches Band an die innere Messrohrwand geklebt werden. Die Kabel zur Kontaktierung der Wandlerelemente können durch das Innere des Messrohrs zu einer Flanschverbindung geführt werden. Über diese Flanschverbindung kann das Messrohr in ein bestehendes Rohrsystem integriert werden. Hierzu sind an den Enden des Messrohrs Messrohrflansche vorhanden, die mit an den anzubindenden Rohren angeordneten Rohrflanschen verbunden werden können. Zudem kann das Ultraschalldurchflussmessgerät wenigstens ein Verbindungselement aufweisen, das im montierten Zustand zwischen einem Messrohrflansch und einem Rohrflansch eingeklemmt ist. Durch dieses Verbindungselement kann die Kabelverbindung der Wandlerelemente in den Außenraum des Messrohrs geführt werden, sodass die Wandlerelemente im Außenraum von der Steuer- und Auswerteeinheit kontaktiert werden können. Beispielsweise ist das wenigstens eine Verbindungselement als Verbindungsleiterplatte ausgebildet, vorzugsweise wobei die Verbindungsleiterplatte zumindest bereichsweise innenliegende Leiterbahnen aufweist. Alternativ kann das Verbindungselement wenigstens einen Kanal zur Führung des Kabels oder der Kabel zur Kontaktierung der Wandlerelemente aufweisen. Durch den wenigstens einen Kanal kann im montierten Zustand das wenigstens eine Kabel in den Außenraum des Messrohrs geführt werden. Ein solcher Kanal ist zum Außenraum hin abgedichtet, beispielsweise mittels Epoxidharz oder mittels einer flüssigkeitsdichten oder gasdichten Verschraubung mit einer Durchführung.

Zudem kann das Messrohr, an dem die Wandlerelemente der Ultraschallwandlerarrays angeordnet sind, als Einsatz ausgebildet sein, wobei der Einsatz für den Betrieb in ein Rohr einer bestehenden Rohranlage eingesetzt wird. Die Kontaktierung der Wandlerelemente kann wie zuvor beschrieben, beispielsweise über ein Verbindungselement erfolgen. Alternativ kann die Kontaktierung auch über wenigstens eine Bohrung in der Wand des Rohrs der bestehenden Rohranlage realisiert sein.

Wird das flexible Band auf dem äußeren Messrohrumfang angeordnet, kann das flexible Band gemäß einer Ausgestaltung in wenigstens zwei Wicklungen angeordnet werden. Gemäß dieser Ausgestaltung sind die Wandlerelemente dann in einem zweidimensionalen Array auf dem Messrohr angeordnet, wobei die Wandlerelemente zweier Wicklungen versetzt zueinander in Bezug auf die Position auf dem Messrohrumfang oder unmittelbar nebeneinander angeordnet sein können. Im Betrieb kann je nach der Anordnung der Wandlerelemente einer zweiten Wicklung zu den Wandlerelementen einer ersten Wicklung das Medium spiralförmig angeregt werden. Durch eine zeitversetzte Ansteuerung der Wandlerelemente der zweiten Wicklung im Vergleich der Ansteuerung der Wandlerelemente der ersten Wicklung kann eine solche spiralförmige Anregung kompensiert oder zumindest verringert werden. Vorzugsweise wird der Zeitversatz so dimensioniert, dass durch die Wandlerelemente der zweiten Wicklung die gewünschte Druckverteilung der durch die Wandlerelemente der ersten Wicklung eingebrachten Ultraschallwelle verstärkt wird. Weiterhin weist die Anwendung eines Zeitversatzes den Vorteil auf, dass sichergestellt werden kann, dass die angeregte effektive Querschnittsfläche des Messrohrs im Wesentlichen senkrecht zur Messrohrachse ausgebildet ist.

Eine solche Anordnung ist gemäß einer Ausgestaltung ebenfalls denkbar für den Fall, dass das flexible Band an der inneren Messrohrwand angeordnet ist.

Gemäß einer nächsten vorteilhaften Ausgestaltung ist das flexible Band als flexible Leiterplatte ausgebildet.

Besonders bevorzugt sind die Wandlerelemente des ersten Ultraschallwandlerarrays auf einer flexiblen Leiterplatte angeordnet, die auf der äußeren Messrohrwand angeordnet ist und/oder die Wandlerelemente des zweiten Ultraschallwandlerarrays sind auf einer flexiblen Leiterplatte angeordnet, die auf der äußeren Messrohrwand angeordnet ist.

Die Anordnung der Wandlerelemente auf einer flexiblen Leiterplatte weist den Vorteil auf, dass die Wandlerelemente besonders einfach kontaktiert werden können. Gemäß dieser Ausgestaltung ist die Steuer- und Auswerteeinheit ebenfalls mit der flexiblen Leiterplatte bzw. den flexiblen Leiterplatten verbunden.

Wie bereits dargelegt kann die Leiterplatte bzw. können die Leiterplatten auch im Inneren des Messrohrs an der inneren Messrohrwand angeordnet werden.

Eine nächste Ausgestaltung des Ultraschalldurchflussmessgeräts zeichnet sich dadurch aus, dass die Wandlerelemente des ersten Ultraschallwandlerarrays im Wesentlichen äquidistant entlang des vollständigen ersten Messrohrumfangs angeordnet sind und/oder dass die Wandlerelemente des zweiten Ultraschallwandlerarrays im Wesentlichen äquidistant entlang des vollständigen zweiten Messrohrumfangs angeordnet sind.

Mit einer im Wesentlichen äquidistanten Anordnung der Wandlerelemente entlang des vollständigen ersten bzw. zweiten Messrohrumfang, sodass die Wandlerelemente unter Berücksichtigung der Abstände zueinander einen Winkel von 360° abdecken, ist eine besonders gleichmäßige Anregung einer ebenen Ultraschallwelle im Medium möglich. Wenn heißt, dass die Wandlerelemente unter Berücksichtigung der Abstände zueinander einen Winkel von 360° abdecken, so ist damit gemeint, dass die Gesamtfläche der Wandlerelemente auch weniger als 360° des Messrohrumfangs abdecken kann, dass jedoch dann die Wandlerelemente beabstandet zueinander entlang des vollständigen Messrohrumfangs angeordnet sind.

Beispielsweise kann die Gesamtfläche der Wandlerelemente insgesamt zwischen 50 % und 80 % des Messrohrumfangs abdecken.

Besonders bevorzugt sind die Wandlerelemente des Ultraschallerregers derart angeordnet, dass sie das Medium achsensymmetrisch in Bezug auf die Messrohrachse anregen können. Beispielsweise sind entlang des ersten Messrohrumfangs zwei, vier, sechs oder acht Wandlerelemente angeordnet, wobei sich vorzugsweise jeweils zwei Wandlerelemente diametral gegenüberliegen. Gemäß einer anderen Ausgestaltung sind entlang des ersten Messrohrumfangs eine Anzahl zwischen 2 und 32 Wandlerelementen oder zwischen 2 und 16 Wandlerelementen oder zwischen 2 und 8 Wandlerelementen angeordnet. Ist die Anzahl an Wandlerelementen gerade, so liegen sich vorzugsweise jeweils zwei Wandlerelemente diametral gegenüber.

Besonders vorteilhaft ist es, wenn die Anzahl und die Größe der Wandlerelemente auf den Messrohrumfang derart abgestimmt ist, dass ein Ultraschallwandlerarray möglichst viele Wandlerelemente aufweist, die im montierten Zustand flächigen Kontakt mit der inneren bzw. äußeren Messrohrwand bzw. mit der Zwischenschicht aufweisen, und dass die Anzahl der Wandlerelemente nach oben durch die Komplexität der Ansteuerung der Wandlerelemente beschränkt ist.

Besonders bevorzugt entspricht die Anzahl und die Anordnung der Wandlerelemente des zweiten Ultraschallwandlerarrays der Anzahl und der Anordnung der Wandlerelemente des ersten Ultraschallarrays.

Gemäß einer vorteilhaften Ausgestaltung des Ultraschalldurchflussmessgeräts sind die Wandlerelemente eines Ultraschallwandlerarrays separat ansteuerbar. Gemäß einer bevorzugten Ausgestaltung werden im Betrieb wenigstens zwei Wandlerelemente gleich, also zeitgleich und mit derselben Amplitude, angesteuert. Gemäß einer nächsten Ausgestaltung werden im Betrieb diametral gegenüberliegende Wandlerelemente gleich angesteuert. Durch eine derartige Ansteuerung kann eine in Bezug auf die Messrohrachse achsensymmetrische Druckverteilung im Medium angeregt werden.

Gemäß einer weiteren bevorzugten Ausgestaltung werden wenigstens zwei Wandlerelemente, die entlang des Umfangs angeordnet sind, mit einem geringen Phasenversatz und/oder mit einer unterschiedlichen Amplitude angesteuert. Gemäß dieser Ausgestaltung können Unregelmäßigkeiten, wie z.B Unregelmäßigkeiten des Messrohrs, beispielsweise Schwankungen der Messrohrwanddicke und/oder Schwankungen der Rundheit des Messrohrs oder unregelmäßige Abstände der Wandlerelemente zueinander ausgeglichen werden.

Ist ein Wandlerelement beispielsweise an einer Stelle des Messrohrs angeordnet, an der das Messrohr eine kleinere Messrohrwanddicke aufweist als im übrigen Bereich des Messrohrs kann dieses Wandlerelement mit einem geringen Zeitversatz ausgesendet werden, damit das von diesem Wandlerelement ausgendete Signal zeitgleich beispielsweise mit dem Signal, das von dem diametral gegenüberliegenden Wandlerelement ausgesendet wird, das Medium erreicht.

Im Ergebnis werden die Wandlerelemente des als Ultraschallerreger dienenden Ultraschallwandlerarrays derart angesteuert, dass durch die Wandlerelemente im Medium zum gleichen Zeitpunkt ein Signal mit einheitlicher Amplitude angeregt wird.

Die Wandlerelemente des Ultraschallempfängers sind vorzugsweise derart angeordnet, dass sie die Druckverteilung im Medium über den vollen Messrohrumfang erfassen können. Damit ist gemeint, dass die Gesamtfläche der Wandlerelemente 360° oder auch weniger als 360° bedecken kann und dass die Wandlerelemente beabstandet zueinander entlang des vollständigen Messrohrumfangs angeordnet sind. Beispielsweise kann die Gesamtfläche der Wandlerelemente insgesamt zwischen 50 % und 80 % bedecken. Da auch die Wandlerelemente des Empfangsarrays separat ausgewertet werden können, können durch Auswertung von nur bestimmten Wandlerelementen gezielt Wellenmoden erfasst bzw. Störsignale herausgefiltert werden. Wird das im Medium angeregte Ultraschallwellenfeld nur mit einigen Wandlerelementen des Empfangswandlerarrays erfasst, so kann eine bestimmte Druckverteilung, insbesondere eine gewünschte Wellenmode, aus dem sich im Medium ausbreitenden Ultraschallwellenfeld selektiv bestimmt werden.

Gemäß einer nächsten bevorzugten Ausgestaltung ist das erste Ultraschallwandlerarray in einem zweiten Betriebszustand auch als Ultraschallempfänger zum Empfang einer Ultraschallwelle ausgebildet und das zweite Ultraschallwandlerarray ist in einem zweiten Betriebszustand auch als Ultraschallerreger zur Anregung einer Ultraschallwelle, die sich im Betrieb durch das Medium ausbereitet, ausgebildet. Mit dieser Ausgestaltung kann die Laufzeit eines Ultraschallsignals, dass sich in einem ersten Betriebszustand beispielsweise in Strömungsrichtung ausbreitet, und die Laufzeit eines Ultraschallsignals, das sich in einem zweiten Betriebszustand entgegen der Strömungsrichtung ausbreitet, bestimmt werden. Aus dem Laufzeitunterschied kann die Strömungsgeschwindigkeit des strömenden Mediums bestimmt werden.

Das Ultraschalldurchflussmessgerät kann gemäß einer nächsten Ausgestaltung im Betrieb auch weitere Parameter des Mediums und/oder der Messanordnung bestimmen. Hierzu ist das erste Ultraschallwandlerarray derart ausgebildet, dass in einem dritten Betriebszustand wenigstens ein Wandlerelement zumindest zeitweise als Ultraschallerreger und wenigstens ein Wandlerelement zumindest zeitweise als Ultraschallempfänger ausgebildet ist und/oder das zweite Ultraschallwandlerarray ist derart ausgebildet, dass in einem dritten Betriebszustand wenigstens ein Wandlerelement zumindest zeitweise als Ultraschallerreger und wenigstens ein Wandlerelement zumindest als Ultraschallempfänger ausgebildet ist.

Beispielsweise kann ein Wandlerelement des ersten Ultraschallwandlerarrays in dem dritten Betriebszustand erst als Ultraschallerreger und anschließend als Ultraschallempfänger funktionieren. Alternativ kann ein Wandlerelement als Ultraschallerreger funktionieren und ein anderes Wandlerelement, insbesondere das Wandlerelement, das dem ersten Wandlerelement diametral gegenüber liegt, kann als Ultraschallempfänger funktionieren. Gleiches gilt für die Ausbildung der Wandlerelemente des zweiten Ultraschallwandlerarrays.

Das erste Ultraschallwandlerarray und/oder das zweite Ultraschallwandlerarray können also auch zusätzlich autonom betrieben werden.

Diese Ausgestaltung weist den Vorteil auf, dass nicht nur die Durchflussgeschwindigkeit des strömenden Mediums bestimmt werden kann, sondern auch weitere Parameter des Mediums oder der Messanordnung. Weitere Parameter sind beispielsweise die Dicke der Messrohrwand, die Rundheit des Messrohrs oder die Dichte des Mediums.

Im Ergebnis ist ein Durchflussmessgerät in verschiedenen Ausführungen beschrieben, das aufgrund der Anordnung und der Ausgestaltung der Ultraschallwandlerarrays eine besonders hohe Flexibilität der Erzeugung und Erfassung von unterschiedlichen Druckverteilungen im Medium bzw. der Aussendung von Ultraschallsignalen in das Medium gewährleistet, sodass das Medium besonders gut vermessen bzw. charakterisiert werden kann

Das Ultraschalldurchflussmessgerät ist insbesondere zur Durchführung von wenigstens einem der nachfolgenden Verfahren ausgebildet.

Gemäß einer zweiten Lehre der vorliegenden Erfindung wird die eingangs genannte Aufgabe durch ein eingangs beschriebenes Verfahren zum Betreiben eines erfindungsgemäßen Ultraschalldurchflussmessgeräts dadurch gelöst, dass das Verfahren in einem ersten Betriebszustand die folgenden Schritte umfasst:

- Anregen von wenigstens zwei Wandlerelementen des ersten Ultraschallwandlerwandlerarrays derart, dass die Wandlerelemente im Medium eine erste geführte Ultraschallwelle anregen, die sich in Richtung des zweiten Ultraschallwandlerarrays ausbreitet,

- Erfassen der ersten Ultraschallwelle durch wenigstens zwei Wandlerelemente des zweiten Ultraschallwandlerarrays, und Weiterleiten der Messsignale der einzelnen Wandlerelemente als erste Messsignale an die Steuer- und Auswerteeinheit,

- Bestimmung der Laufzeit der ersten Ultraschallwelle aus den ersten Messsignalen durch die Steuer- und Auswerteeinheit,

und dass das Verfahren in einem zweiten Betriebszustand die folgenden Schritte umfasst:

- Anregen von wenigstens zwei Wandlerelementen des zweiten Ultraschallwandlerarrays derart, dass die Wandlerelemente im Medium eine zweite geführte Ultraschallwelle anregen, die sich in Richtung des ersten Ultraschallwandlerarrays ausbreitet,

- Erfassen der zweiten Ultraschallwelle durch wenigstens zwei Wandlerelemente des ersten Ultraschallwandlerarrays und Weiterleiten der Messsignale der einzelnen Wandlerelemente als zweite Messsignale an die Steuer- und Auswerteeinheit,

- Bestimmung der Laufzeit der zweiten Ultraschallwelle aus den zweiten Messsignalen durch die Steuer- und Auswerteeinheit und

- Bestimmung der Durchflussgeschwindigkeit des fließenden Mediums aus dem Laufzeitunterschied der ersten und der zweiten Ultraschallwelle.

Erfindungsgemäß wird anhand des Laufzeitunterschiedes eines sich in und entgegen der Strömungsrichtung ausbreitenden Ultraschallwellenfeldes die Strömungsgeschwindigkeit des strömenden Mediums bestimmt.

Dabei werden die Wandlerelemente des ersten Ultraschallwandlerarrays und die Wandlerelemente des zweiten Ultraschallwandlerarrays vorzugsweise derart angesteuert, dass sie ein ebenes Wellenfeld im Messrohr anregen. Hierzu werden die Wandlerelemente des als Ultraschallerreger arbeitenden Ultraschallwandlerarrays vorzugsweise derart angesteuert, dass sie zeitgleich und mit gleicher Amplitude das Medium anregen. Insbesondere entspricht die Wellenlänge der angeregten Welle ungefähr dem Durchmesser des Messrohrs. Somit kann im Messrohr eine ebene Welle angeregt werden, die den gesamten Strömungsquerschnitt umfasst, sodass im Wesentlichen alle Komponenten des Strömungsquerschnitts bei der Bestimmung der Geschwindigkeit des strömenden Mediums berücksichtigt werden.

Je geringer die Abdeckung des Messrohrumfangs durch die Wandlerelemente ist, desto mehr Energie geht in nicht gewünschte Wellenmoden. Insofern ist ein möglichst große Abdeckung des Messrohrumfangs vorteilhaft.

Das erfindungsgemäße Verfahren weist den Vorteil auf, dass durch die Anordnung der Wandlerelemente entlang des inneren oder äußeren Messrohrumfangs ein Ultraschallwellenfeld derart im Messrohr angeregt wird, dass das Ultraschallwellenfeld den Messrohrquerschnitt im Wesentlichen vollständig ausfüllt und damit das Strömungsprofil im Wesentlichen vollständig erfasst. Dadurch, dass sämtliche Geschwindigkeitskomponenten des Strömungsprofils berücksichtigt werden, kann mittels des erfindungsgemäßen Verfahrens die Strömungsgeschwindigkeit des fließenden Mediums besonders genau bestimmt werden.

Besonders bevorzugt werden vor der Bestimmung der Laufzeitdifferenz die aufgrund von Dispersion entstehenden Laufzeiten verschiedener Frequenzanteile einer Ultraschallwelle korrigiert.

Eine Methode zur Dispersionskorrektur ist beispielsweise in dem Paper "Measurement of Pipe and Fluid Properties with a Matrix Array-Based Ultrasonic Clamp-On Flow Meter" von Jack Massaad, Paul L.M.J. van Neer, Douwe M. van Willingen, Nicolaas de Jong, Michiel A.P. Pertijs und Martin D. Verweij, IEEE Transactions on ultrasonics, ferroelectrics, and frequency control, vol. 69, No.1, Januar 2022, beschrieben.

Beispielsweise wird der sich aus den Laufzeitunterschieden ergebende Phasenunterschied im Frequenzbereich korrigiert und das sich ergebende dispersionsfreie Signal wird zur weiteren Auswertung, insbesondere zur Bestimmung der Laufzeit der Ultraschallwelle, zurück in den Zeitbereich transformiert.

Alternativ oder zusätzlich können die Wandlerelemente des als Ultraschallerreger funktionierenden Ultraschallwandlerarrays derart angesteuert werden, dass ein aufgrund von Dispersion zu erwartender Laufzeit verschiedener Frequenzanteile zumindest verringert wird. Beispielsweise kann dazu die Bandbreite des in das Medium eingebrachten pulsförmigen Signals verringert werden. Zudem können die Frequenzanteile, die eine höhere Laufzeit aufweisen, mit einem Zeitversatz ausgesendet werden, der den Dispersionseffekt ausgleicht.

Weiterhin können die Wandlerelemente des als Ultraschallerreger arbeitenden Ultraschallwandlerarrays derart angesteuert werden, dass Unregelmäßigkeiten des Messrohrs oder der Anordnung der Wandlerelemente ausgeglichen werden. Ist beispielsweise lokal die Messrohrdicke verringert, kann ein an dieser Stelle angeordnetes Wandlerelement ein Signal mit geringerer Amplitude und/oder mit einem geringen Zeitversatz aussenden.

Gemäß einer weiteren bevorzugten Ausgestaltung wird in wenigstens einem weiteren Betriebszustand das erste Ultraschallwandlerarray autonom betrieben, sodass mit dem ersten Ultraschallwandlerarray wenigstens eine Eigenschaft des Mediums und/oder des Messrohrs im Bereich des ersten Messrohrumfangs bestimmt werden kann und/oder in wenigstens einem weiteren Betriebszustand wird das zweite Ultraschallwandlerarray autonom betrieben, sodass mit dem zweiten Ultraschallwandlerarray wenigstens eine Eigenschaft des Mediums und/oder des Messrohrs im Bereich des zweiten Messrohrumfangs bestimmt werden kann.

Beispielsweise funktioniert in dem wenigstens einen weiteren Betriebszustand wenigstens ein Wandlerelement des ersten Ultraschallwandlerarrays zumindest zeitweise als Ultraschallerreger und wenigstens ein Wandlerelement des ersten Ultraschallwandlerarrays funktioniert zumindest zeitweise als Ultraschallempfänger, sodass mit dem ersten Ultraschallwandlerarray wenigstens eine Eigenschaft des Mediums und/oder des Messrohrs im Bereich des ersten Messrohrumfangs bestimmt werden kann

und/oder

in dem wenigstens einen weiteren Betriebszustand funktioniert wenigstens ein Wandlerelement des zweiten Ultraschallwandlerarrays zumindest zeitweise als Ultraschallerreger und wenigstens ein Wandlerelement des zweiten Ultraschallwandlerarrays funktioniert zumindest zeitweise als Ultraschallempfänger, sodass mit dem zweiten Ultraschallwandlerarray wenigstens eine Eigenschaft des Mediums und/oder des Messrohrs im Bereich des zweiten Messrohrumfangs bestimmt werden kann.

Das Wandlerelement des ersten Ultraschallwandlerarrays, das zumindest zeitweise als Ultraschallerreger funktioniert, kann in dem weiteren Betriebszustand auch zeitweise als Ultraschallempfänger funktionieren. Alternativ kann ein Wandlerelement als Ultraschallerreger funktionieren und ein anderes Wandlerelement kann als Ultraschallempfänger funktionieren.

Gleiches gilt für das zweite Ultraschallwandlerarray.

Gemäß einer besonders bevorzugten Ausgestaltung sendet in dem wenigstens einen weiteren Betriebszustand wenigstens ein Wandlerelement des ersten Ultraschallwandlerarrays ein Ultraschallsignal senkrecht zur Messrohrwand in das Medium aus und empfängt anschließend das an der gegenüberliegenden inneren Messrohrwand reflektierte Signal. Die Steuer- und Auswerteeinheit bestimmt unter Berücksichtigung des ausgesendeten Signals mit der Amplitude $A_0$ und des reflektierten Signals mit der Amplitude $A_m$ die Dichte des Mediums. Im Detail wird zunächst der Reflexionskoeffizient R gemäß

$$R = -\frac{A_m}{A_0 k}$$

bestimmt. Hierbei ist k ein Kalibrationsfaktor. Der Kalibrationsfaktor berücksichtigt insbesondere die Beugung und Abschwächung des Signals durch die Messrohrwand und/oder durch eine eventuell vorhandene akustische Kopplungsschicht, in dem Fall in dem die Wandlerelemente außen auf dem Messrohr angeordnet sind. Der Kalibrationsfaktor kann im Rahmen einer Kalibrationsmessung von einem Medium mit bekannter Dichte bestimmt werden.

Aus dem Reflexionskoeffizient R wird die akustische Impedanz $Z_m$ des Mediums gemäß folgendem Zusammenhang bestimmt:

$$Z_m = Z_{Messrohrwand} \frac{1 + R}{1 - R}$$

$Z_{Messrohrwand}$ entspricht der akustischen Impedanz des Messrohrs. Diese wird als bekannt angenommen. Sofern die Schallgeschwindigkeit $c_m$ des Mediums nicht bekannt ist, wird diese ebenfalls, beispielsweise wie weiter unten beschrieben, beispielsweise durch eine Laufzeitmessung gemessen.

Anschließend kann die Dichte $\rho_m$ des Mediums gemäß dem Zusammenhang

$$\rho_m = \frac{Z_m}{c_m}$$

bestimmt werden.

Die Bestimmung der Dichte kann zusätzlich mit einem anderen Wandlerelement oder mit mehreren anderen Wandlerelementen erfolgen, sodass mehrere Werte für die Dichte vorliegen. Zudem kann die Messung auch mit dem anderen Ultraschwandlerarray durchgeführt werden.

Gemäß einer weiteren bevorzugten Ausgestaltung sendet in dem wenigstens einen weiteren Betriebszustand wenigstens ein Wandlerelement des ersten Ultraschallwandlerarrays ein Ultraschallsignal senkrecht zur Messrohrwand durch die Messrohrwand in das Medium aus und empfängt anschließend ein an der gegenüberliegenden inneren Messrohrwand reflektiertes Signal sowie ein Signal, das in die gegenüberliegende Messrohrwand eindringt und an dem Übergang der Messrohrwand in den Außenraum reflektiert wird. Unter Berücksichtigung der Laufzeit der reflektierten Signale bestimmt die Steuer- und Auswerteeinheit die Dicke der Messrohrwand. Die Dicke der Messrohrwand kann alternativ oder zusätzlich auch mit dem reflektierten Signal, das auf die Reflexion des Ultraschallsignals an dem Übergang zwischen der ersten inneren Messrohrwand, in die das Ultraschallsignal ausgesendet wird, zurückzuführen ist und dem Messrohrinneren bestimmt werden.

Auch die Bestimmung der Dicke der Messrohrwand kann mit anderen Wandlerelementen erfolgen. Wird die Dicke der Messrohrwand in einer Querschnittsfläche des Messrohrs an verschiedenen Stellen bestimmt, so kann daraus die Rundheit des Messrohrs bestimmt werden. Gemäß einer besonders bevorzugten Ausgestaltung des Verfahrens wird die Bestimmung der Dicke der Messrohrwand und/oder der Rundheit des Messrohr, zumindest einmalig, vor der Bestimmung der Geschwindigkeit des fließenden Mediums durchgeführt. Basierend auf den gemessenen Werten für die Dicke des Messrohrwand und/oder der Rundheit des Messrohrs können die Wandlerelemente bei der Bestimmung der Durchflussgeschwindigkeit individuell derart angesteuert werden, dass Schwankungen in der Dicke des Messrohrs und/oder in der Rundheit des Messrohrs ausgeglichen werden.

Gemäß einer weiteren vorteilhaften Ausgestaltung sendet in dem wenigstens einen weiteren Betriebszustand wenigstens ein Wandlerelement des ersten Ultraschallwandlerarrays ein Ultraschallsignal senkrecht zur Messrohrwand durch die Messrohrwand in das Medium aus und das gegenüberliegende Wandlerelement empfängt das durch das Medium transmittierte Ultraschallsignal. Die Steuer- und Auswerteeinheit bestimmt unter Berücksichtigung der Übergänge zwischen der Messrohrwand und dem Medium und eventuell vorhandenen akustischen Kopplungsschichten die Schallgeschwindigkeit des Mediums.

Es gibt nun eine Vielzahl von Möglichkeiten das erfindungsgemäße Ultraschalldurchflussmessgerät und das erfindungsgemäße Verfahren auszugestalten und weiterzubilden. Hierzu wird verwiesen auf die den unabhängigen Patentansprüchen nachgeordneten Patentansprüche sowie auf die nachfolgend beschriebenen Ausführungsbeispiele in Kombination mit der Zeichnung.

In der Zeichnung zeigen:

Fig. 1    ein erstes Ausführungsbeispiel eines Ultraschalldurchflussmessgeräts,

Fig. 2    ein weiteres Ausführungsbeispiel eines Ultraschalldurchflussmessgeräts im Querschnitt,

Fig. 3    ein weiteres Ausführungsbeispiel eines Ultraschalldurchflussmessgeräts im Querschnitt,

Fig. 4    ein weiteres Ausführungsbeispiel eines Ultraschalldurchflussmessgeräts,

Fig. 5    ein weiteres Ausführungsbeispiel eines Ultraschalldurchflussmessgeräts,

Fig. 6    ein weiteres Ausführungsbeispiel eines Ultraschalldurchflussmessgeräts,

Fig. 7    ein weiteres Ausführungsbeispiel eines Ultraschalldurchflussmessgeräts,

Fig. 8    ein erstes Ausführungsbeispiel eines Verfahrens zum Betreiben eines Ultraschalldurchflussmessgeräts,

Fig. 9    ein weiteres Ausführungsbeispiel eines Verfahrens zum Betreiben eines Ultraschalldurchflussmessgeräts und

Fig. 10 ein weiteres Ausführungsbeispiel eines Verfahrens zum Betreiben eines Ultraschalldurchflussmessgeräts.

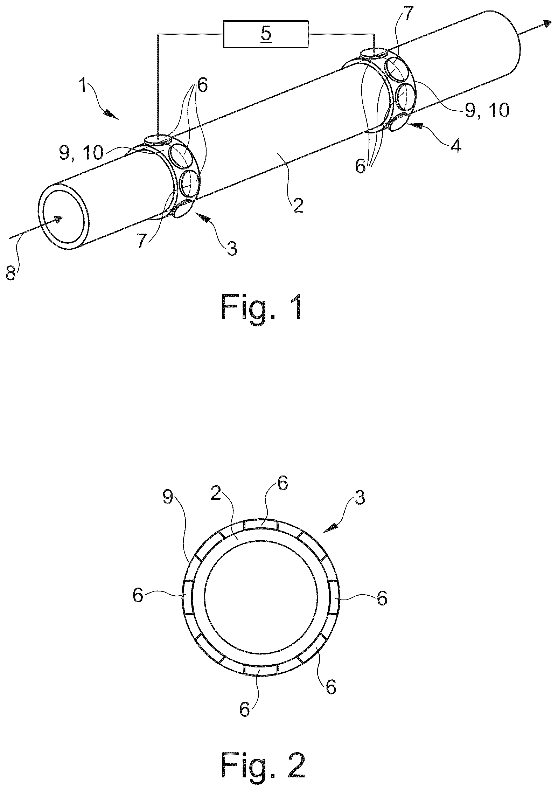

Fig. 1 zeigt ein Ausführungsbeispiel eines Ultraschalldurchflussmessgeräts 1. Das Ultraschalldurchflussmessgerät 1 umfasst ein Messrohr 2, ein erstes Ultraschallwandlerarray 3, ein zweites Ultraschallwandlerarray 4 und eine Steuer- und Auswerteeinheit 5. Im Betrieb wird das Messrohr 2 von einem Medium, beispielsweise einem Fluid oder einem Gas durchflossen. Hierzu ist das Messrohr 2 im montierten Zustand mit weiteren Rohren einer Anlage verbunden. Zudem kann das dargestellte Messrohr 2 auch bereits Teil der Anlage sein.

Das erste Ultraschallwandlerarray 3 und das zweite Ultraschallwandlerarray 4 sind in Strömungsrichtung 8 gesehen beabstandet zueinander an dem Messrohr 2 angeordnet.

Die Steuer- und Auswerteeinheit 5 ist sowohl mit dem ersten Ultraschallwandlerarray 3 als auch mit dem zweiten Ultraschallwandlerarray 4 verbunden.

Die Ultraschallwandlerarrays 3, 4 sind derart ausgebildet, dass in einem ersten Betriebszustand das erste Ultraschallwandlerarray 3 zumindest als Ultraschallerreger zur Anregung einer geführten Ultraschallwelle, die sich im Betrieb durch das Medium ausbereitet, ausgebildet ist und dass das zweite Ultraschallwandlerarray 4 in dem ersten Betriebszustand zumindest als Ultraschallempfänger zum Empfang dieser Ultraschallwelle ausgebildet ist.

Zur Aussendung einer Ultraschallwelle weist das erste Ultraschallwandlerarray eine Mehrzahl von, insbesondere separat ansteuerbaren, Wandlerelementen 6 auf, wobei die Mehrzahl von, insbesondere separat ansteuerbaren, Wandlerelementen 6 auf einem ersten Messrohrumfang 7 angeordnet ist,

Das zweite Ultraschallwandlerarray 4 weist für den Empfang der Ultraschallwelle ebenfalls eine Mehrzahl von, insbesondere separat ansteuerbaren, Wandlerelementen 6 auf, wobei die Mehrzahl von, insbesondere separat ansteuerbaren, Wandlerelementen 6 auf einem zweiten Messrohrumfang 7 angeordnet ist

Dabei sind in beiden Fällen die Wandlerelemente 6 klein im Vergleich zum Messrohrumfang 7.

Im Detail weist im dargestellten Ausführungsbeispiel das erste Ultraschallwandlerarray 3 acht Wandlerelemente 6 auf, die äquidistant über den Messrohrumfang 7 verteilt angeordnet sind. Dabei liegen sich jeweils zwei Wandlerelemente 6 diametral gegenüber. Die Wandlerelemente 6 können von der Steuer- und Auswerteeinheit 5, vorzugsweise separat, angesteuert werden. Hierzu sind die Wandlerelemente 6 auf einem flexiblen Band 9 angeordnet, wobei das flexible Band 9 um das Messrohr 2 gelegt ist. Im dargestellten Ausführungsbeispiel ist das flexible Band 9 als flexible Leiterplatte 10 ausgebildet.

Die flexible Leiterplatte 10 ist mit der Steuer- und Auswerteeinheit 5 verbunden.

Durch eine separate Ansteuerung der einzelnen Wandlerelemente 6 können unterschiedliche Kombinationen von Wandlerelementen 6 angesteuert werden, um ein Ultraschallwellenfeld im Messrohr 2 anzuregen. Beispielsweise können die diagonal einander gegenüberliegenden Wandlerelemente 6 zusammen angeregt werden. Zudem können auch wenigstens zwei Wandlerelemente 6 mit einer unterschiedlichen Phase und/oder Amplitude derart angesteuert werden, dass kleinere Unregelmäßigkeiten, wie beispielsweise Schwankungen der Messrohrwanddicke und/oder der Rundheit des Messrohrs und/oder der Abstände der Wandlerelemente 6 zueinander, ausgeglichen werden können.

Zudem können auch am stromabwärts angeordneten Ultraschallempfangsarray Wellenmoden selektiv dadurch erfasst werden, dass nur einige Empfangswandlerelemente 6 die erfasste Druckschwankung an die Steuer-und Auswerteeinheit weiterleiten können oder dass nur einige von den Empfangswandlerelementen 6 Signale an die Steuer- und Auswerteeinheit weiterleiten.

Beispielsweise können die Wandlerelemente 6 des ersten Ultraschallwandlerarrays 3 derart angesteuert werden, dass im Medium eine ebene Wellenfront angeregt wird, die den Strömungsquerschnitt des Mediums im Wesentlichen vollständig abdeckt. Dies weist den Vorteil auf, dass alle Geschwindigkeitskomponenten des Strömungsprofils bei der Bestimmung der Geschwindigkeit des strömenden Mediums nach dem bekannten Laufzeitverfahren berücksichtigt werden. Hierzu werden die Wandlerelemente 6 derart angesteuert, dass alle Wandlerelemente 6 ein Signal gleicher Phase und Amplitude in das Medium einbringen. Eventuell vorhandene Unregelmäßigkeiten können durch eine Ansteuerung einzelner Wandlerelemente 6 mit geringem Phasenversatz oder geringfügig anderer Amplitude korrigiert werden.

Zur Durchflussmessung sind die Ultraschallwandlerarrays 3, 4 derart ausgebildet, dass in einem zweiten Betriebszustand das zweite Ultraschallwandlerarray 4 zumindest als Ultraschallerreger zur Anregung einer geführten Ultraschallwelle, die sich im Betrieb durch das Medium ausbereitet, ausgebildet ist und dass das erste Ultraschallwandlerarray 3 in dem zweiten Betriebszustand zumindest als Ultraschallempfänger zum Empfang dieser Ultraschallwelle ausgebildet ist.

Fig. 2 zeigt ein weiteres Ausführungsbeispiel eines Ultraschalldurchflussmessgeräts 1 im Querschnitt. Im Detail zeigt die Darstellung den Querschnitt im Bereich des ersten Ultraschallwandlerarrays 3. Die einzelnen Wandlerelemente 6 sind auf dem Messrohr 2 angeordnet. Zudem sind die Wandlerelemente 6 auf einem flexiblen Band 9 angeordnet, das um das Messrohr 2 gelegt ist. Im Unterschied zu dem in Fig. 1 gezeigten Ausführungsbeispiel ist das flexible Band 9 an der dem Messrohr 2 abgewandten Seite der Wandlerelemente 6 angeordnet.

Das dargestellte erste Ultraschallwandlerarray 3 weist acht Wandlerelemente 6 auf, wobei jeweils zwei Wandlerelemente 6 einander diametral gegenüberliegen. Werden im Betrieb alle acht Wandlerelemente 6 gleich angesteuert, so kann im Messrohr 2 eine ebene Welle, die im Wesentlichen den gesamten Querschnitt des strömenden Mediums abdeckt, angeregt werden. Wird basierend auf der Laufzeit dieser Ultraschallwelle die Strömungsgeschwindigkeit des strömenden Mediums bestimmt, so können in vorteilhafter Weise alle Geschwindigkeitskomponenten des Strömungsprofils berücksichtigt werden.

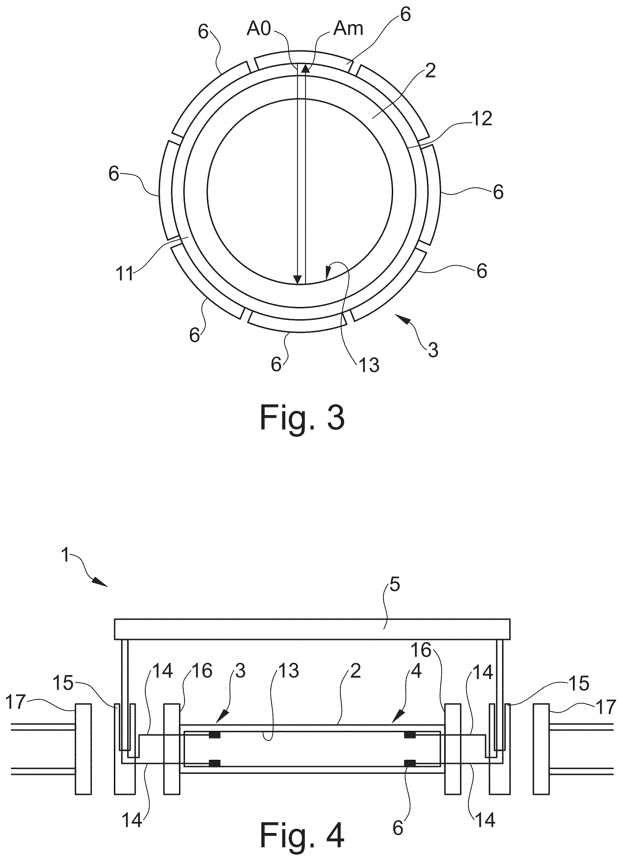

Fig. 3 zeigt ein weiteres Ausführungsbeispiels eines an einem Messrohr 2 angeordneten ersten Ultraschallwandlerarrays 3 im Querschnitt. Zwischen den Wandlerelementen 6 und der äußeren Messrohrwand 12 ist eine akustische Kopplungsschicht 11 angeordnet, die die Schallübertragung in das Messrohrinnere verbessert.

Dargestellt ist ein Betriebszustand, in dem das Ultraschallwandlerarray 3 derart betrieben wird, dass ein Wandlerelement 6 ein Ultraschallsignal mit einer Amplitude $A_0$ senkrecht in das Messrohr 2 aussendet und das an der gegenüberliegenden inneren Messrohrwand 13 reflektierte Signal, das dann eine Amplitude $A_m$ aufweist, empfängt. Das Ultraschallwandlerarray 3 wird im dargestellten Betriebszustand also gerade nicht zur Bestimmung der Geschwindigkeit eines strömenden Mediums eingesetzt, sondern zur Bestimmung eines Parameters des Mediums, insbesondere der Dichte des Mediums.

Fig. 4 zeigt ein weiteres Ausführungsbeispiel eines Ultraschalldurchflussmessgeräts 1 im Längsschnitt mit einem Messrohr 2, einem ersten Ultraschallwandlerarray 3 und einem zweiten Ultraschallwandlerarray 4, wobei das erste Ultraschallwandlerarray 3 und das zweite Ultraschallwandlerarray 4 an der inneren Messrohrwand 13 angeordnet sind.

Zur Kontaktierung der Wandlerelemente 6 sind Kabel 14 vorhanden, die über ein Verbindungselement 15 in den Außenraum des Messrohrs 2 geführt werden.

Das Messrohr 2 weist endseitig Flansche 16 auf, die zur Anbindung an Rohre eines bestehenden Rohrsystems mit an diesen Rohren angeordneten Rohrflanschen 17 verbunden werden. Zwischen jeweils einem Flansch 16 und einem Rohrflansch 17 ist ein Verbindungselement 15 angeordnet. Im dargestellten Ausführungsbeispiel weist das Verbindungselement 15 Kanäle auf, über die die Kabel 14 in den Außenraum des Messrohrs 2 geführt werden. Im Außenraum des Messrohrs 2 werden die Kabel 14 mit der Steuer- und Auswerteeinheit 5 verbunden. Zur Veranschaulichung sind die Flansche 16, die Rohrflansche 17 und die Verbindungselemente 15 beabstandet zueinander angeordnet.

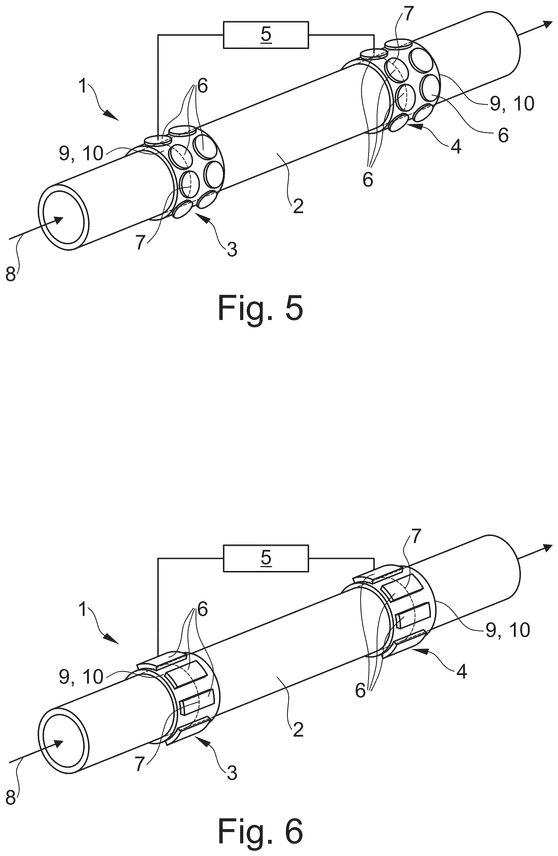

Fig. 5 zeigt ein weiteres Ausführungsbeispiel eines Ultraschalldurchflussmessgeräts 1. In dem dargestellten Ausführungsbeispiel sind die Wandlerelemente 6 des ersten Ultraschallwandlerarrays 3 sowie auch die Wandlerelemente 6 des zweiten Ultraschallwandlerarrays 4 in zwei Reihen auf dem Band 9 angeordnet. In der Folge sind die Wandlerelemente 6 sowohl des ersten Ultraschallwandlerarrays 3 als auch die Wandlerelemente 6 des zweiten Ultraschallwandlerarrays 4 in zwei Reihen an dem Messrohr 2 angeordnet. Im Betrieb kann diese Anordnung durch gezielte Ansteuerung der Wandlerelemente der in Fließrichtung zweiten Reihe dazu genutzt werden, die gewünschte Wellenmode, die durch die Wandlerelemente 6 der ersten Reihe im Medium angeregt werden, zu verstärken. Hierzu werden die Wandlerelemente 6 im Betrieb von der Steuer- und Auswerteeinheit leicht zeitversetzt angesteuert.

Fig. 6 zeigt ein weiteres Ausführungsbeispiel eines Ultraschalldurchflussmessgeräts 1. Im dargestellten Ausführungsbeispiel sind die Wandlerelemente 6 nicht scheibenförmig sind quaderförmig mit rechteckiger Grundfläche ausgebildet. Zudem sind die Wandlerelemente 6 derart auf dem Messrohr 2 angeordnet, dass die lange Seite der Rechtecke in Fließrichtung des Mediums orientiert ist. Diese Ausgestaltung weist den Vorteil auf, dass eine besonders große Kontaktfläche zwischen den Wandlerelementen 6 und dem Messrohr 2 besteht, sodass im Betrieb viel Energie ins Medium eingebracht werden kann.

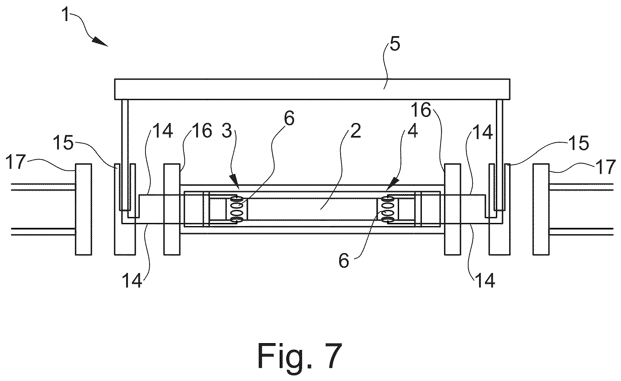

Fig. 7 zeigt schematisch ein weiteres Ausführungsbeispiel eines Ultraschalldurchflussmessgeräts 1. In dem dargestellten Ausführungsbeispiel ist das Messrohr 2 als Messrohreinsatz ausgebildet, wobei der Messrohreinsatz in ein Rohr einer bestehenden Rohranlage eingesetzt ist. Auf dem äußeren Messrohrumfang des Messrohrs 2 sind ein erstes Ultraschallwandlerarray 3 und ein zweites Ultraschallwandlerarray 4 angeordnet. Beide Ultraschallwandlerarrays 3 und 4 weisen Wandlerelemente 6 auf, die mittels einer flexiblen Leiterplatte um das Messrohr 2 angeordnet sind. Die Kontaktierung der Wandlerelemente 6 erfolgt über Kabel 14, die über eine Flanschverbindung 16, 17 und ein Verbindungselement 15, das zwischen den Flanschen angeordnet werden kann, in den Außenraum geführt und im Außenraum mit der Steuer- und Auswerteeinheit 5 verbunden sind. Alternativ können die Ultraschallwandlerarrays 3 und 4 bei einem als Messrohreinsatz ausgebildeten Messrohr auch an der inneren Messrohrwand angeordnet sein.

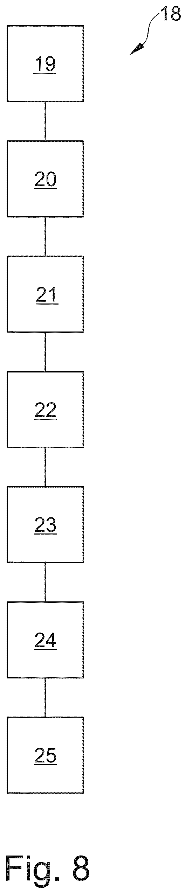

Fig. 8 zeigt ein erstes Ausführungsbeispiel eines Verfahrens 18 zum Betreiben eines Ultraschalldurchflussmessgeräts, wobei das Ultraschalldurchflussmessgerät wie in Fig. 1 dargestellt, ausgebildet ist. Das Ultraschalldurchflussmessgerät ist in ein bestehendes Rohrsystem integriert. Zudem fließt ein Medium durch das Messrohr.

Die Ultraschallwandlerarrays 3, 4 sind derart ausgebildet und werden derart angesteuert, dass in einem ersten Betriebszustand das erste Ultraschallarray 3 als Ultraschallerreger funktioniert und das zweite Ultraschallarray 4 als Ultraschallempfänger funktioniert und dass in einem zweiten Betriebszustand das erste Ultraschallarray 3 als Ultraschallempfänger funktioniert und das zweite Ultraschallarray 4 als Ultraschallerreger funktioniert.

Das Verfahren 18 umfasst in einem ersten Betriebszustand die folgenden Schritte:

- Anregen 19 von wenigstens zwei Wandlerelementen 6 des ersten Ultraschallwandlerarrays 3 derart, dass die Wandlerelemente 6 im Medium eine erste geführte Ultraschallwelle anregen, die sich in Richtung des zweiten Ultraschallwandlerarrays 4 ausbreitet,

- Erfassen 20 der ersten Ultraschallwelle durch wenigstens zwei Wandlerelemente 6 des zweiten Ultraschallwandlerarrays 4, und Weiterleiten der Messsignale der einzelnen Wandlerelemente 6 als erste Messsignale an die Steuer-und Auswerteeinheit 5,

- Bestimmung 21 der Laufzeit der ersten Ultraschallwelle aus den ersten Messsignalen durch die Steuer- und Auswerteeinheit 5.

In dem zweiten Betriebszustand umfasst das Verfahren 18 die folgenden Schritte:

- Anregen 22 von wenigstens zwei Wandlerelementen 6 des zweiten Ultraschallwandlerarrays 4 derart, dass die Wandlerelemente 6 im Medium eine zweite geführte Ultraschallwelle anregen, die sich in Richtung des ersten Ultraschallwandlerarrays 3 ausbreitet,

- Erfassen 23 der zweiten Ultraschallwelle durch wenigstens zwei Wandlerelemente 6 des ersten Ultraschallwandlerarrays 3, und Weiterleiten der Messsignale der einzelnen Wandlerelemente als zweite Messsignale an die Steuer- und Auswerteeinheit 5,

- Bestimmung 24 der Laufzeit der zweiten Ultraschallwelle aus den zweiten Messsignalen durch die Steuer- und Auswerteeinheit 5 und

- Bestimmung 25 der Durchflussgeschwindigkeit des fließenden Mediums aus dem Laufzeitunterschied der ersten und der zweiten Ultraschallwelle.

Das erfindungsgemäße Verfahren weist den Vorteil auf, dass insbesondere in dem Fall, in dem ein ebenes Ultraschallwellenfeld angeregte wird, mit einer hin- und rückläufigen Laufzeitmessung die Geschwindigkeit des strömenden Mediums bestimmt werden kann, wobei sämtliche Geschwindigkeitskomponenten des Strömungsprofils berücksichtigt werden können. Aus dem Stand der Technik bekannte Verfahren verwenden für die Vermessung von verschiedenen Bereichen des Strömungsprofils eines strömenden Mediums eine Mehrzahl von paarweise aufeinander abgestimmte Ultraschallwander, wobei jedes Ultraschallwandlerpaar einen Bereich des Strömungsprofils vermisst.

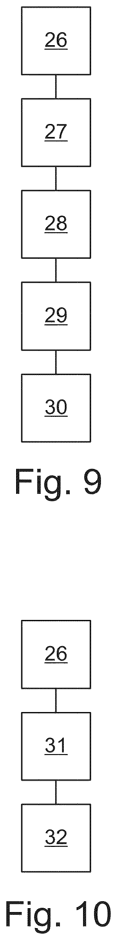

Fig. 9 zeigt ein weiteres Ausführungsbeispiel eines Verfahrens zum Betreiben eines Ultraschalldurchflussmessgeräts wobei das Ultraschalldurchflussmessgerät wie in Fig. 1 gezeigt ausgestaltet ist. Das dargestellte Ausführungsbeispiel zeigt einen weiteren Betriebszustand des Ultraschalldurchflussmessgeräts, in dem die Dichte des Mediums bestimmt wird.

Das Verfahren umfasst die folgenden Schritte: In einem ersten Schritt 26 sendet wenigstens ein Wandlerelement 6 des ersten Ultraschallwandlerarrays 3 ein Ultraschallsignal mit einer Amplitude $A_0$ senkrecht zur Messrohrwand in das Medium aus. In einem anschließenden Schritt 27 empfängt das Wandlerelement 6 das an der gegenüberliegenden inneren Messrohrwand reflektierte Signal, das eine Amplitude $A_m$ aufweist. Aus der ausgesendeten Amplitude $A_0$ und der empfangenen Amplitude $A_m$ und einem Kalibrationsfaktor k bestimmt die Steuer- und Auswerteeinheit 5 in einem nächsten Schritt 28 den Reflektionskoeffizienten. Aus dem Reflektionskoeffizienten R wird unter Berücksichtigung der bekannten akustischen Impedanz der Messrohrwand $Z_{Messrohrwand}$ die akustische Impedanz des Mediums $Z_m$ bestimmt 29.

Aus der akustischen Impedanz des Mediums $Z_m$ wiederum lässt sich mit Hilfe der Schallgeschwindigkeit $c_m$ des Mediums die Dichte des Mediums $\rho_m$ bestimmen 30.

Auf dem gleichen Weg kann die Dichte des Mediums mit dem zweiten Ultraschallwandlerarray 4 bestimmt werden, wodurch die im Bereich des ersten Messrohrumfangs bestimmte Dichte des Mediums kontrolliert werden kann.

Fig. 10 zeigt ein weiteres Ausführungsbeispiel eines Verfahrens zum Betreiben eines Ultraschalldurchflussmessgeräts 1, das wie in Fig. 1 dargestellt, ausgebildet ist. Auch das in Fig. 10 dargestellte Verfahren betrifft einen weiteren Betriebszustand des Durchflussmessgeräts, in dem mit einem Ultraschallwandlerarray ein Parameter der Messanordnung, im Detail die Dicke der Messrohrwand bestimmt wird.

Hierzu sendet wenigstens ein Wandlerelement des ersten Ultraschallwandlerarrays ein Ultraschallsignal senkrecht zur Messrohrwand durch die Messrohrwand in das Medium aus.

Im anschließenden Schritt 31 empfängt das Wandlerelement das an der gegenüberliegenden inneren Messrohrwand reflektierte Signal sowie ein Signal, das in die gegenüberliegende Messrohrwand eindringt und an dem Übergang der Messrohrwand in den Außenraum reflektiert wird, und leitet diese Signale an die Steuer- und Auswerteeinheit weiter. Alternativ oder zusätzlich kann auch das an der ersten inneren Messrohrwand, also der Messrohrwand, in das Signal ausgesendet wird, reflektierte Signal erfasst und wie folgt ausgewertet werden.

Die Steuer- und Auswerteeinheit 5 bestimmt in einem nächsten Schritt 32 unter Berücksichtigung der Laufzeit der reflektierten Signale die Dicke der Messrohrwand im Bereich des ersten Messrohrumfangs.

Besonders bevorzugt kann im Bereich des ersten Messrohrumfangs mit verschiedenen diametral einander gegenüberliegenden Wandlerelementen die Dicke der Messrohrwand lokal bestimmt werden.

Die Ergebnisse der Messung der Messrohrdicke an verschiedenen Stellen kann dazu genutzt werden, die Wandlerelemente zur Bestimmung der Geschwindigkeit des fließenden Mediums individuell derart anzusteuern, dass Schwankungen der Messrohrdicke ausgeglichen werden,

Auf die zuvor beschriebene Weise kann auch die Dicke des Messrohrwand mit dem zweiten Ultraschallwandlerarray, vorzugsweise durch verschiedene diametral gegenüberliegende Wandlerpaare bestimmt werden. Auch die gemessene Dicke der Messrohrwand kann bei der Auswertung der durch die Wandlerelemente erfassten Signale berücksichtigt werden. Im Detail können Schwankungen der Messohrdicke während der Auswertung korrigiert werden.

**Bezugszeichen**

1 Ultraschalldurchflussmessgerät

2 Messrohr

3 Erstes Ultraschallwandlerarray

4 Zweites Ultraschallwandlerarray

5 Steuer- und Auswerteeinheit

6 Wandlerelement

7 Messrohrumfang

8 Strömungsrichtung

9 Flexibles Band

10 Flexible Leiterplatte

11 Akustische Kopplungsschicht

12 Äußere Messrohrwand

13 Innere Messrohrwand

14 Kabel

15 Verbindungselement

16 Flansch

17 Rohrflansch

18 Verfahren zum Betreiben eines Ultraschalldurchflussmessgeräts

19 Anregen von wenigstens zwei Wandlerelementen des ersten Ultraschallarrays

20 Erfassen der ersten Ultraschallwelle

21 Bestimmung der Laufzeit der ersten Ultraschallwelle

22 Anregen von wenigstens zwei Wandlerelementen des zweiten Ultraschallarrays

23 Erfassen der zweiten Ultraschallwelle

24 Bestimmung der Laufzeit der zweiten Ultraschallwelle

25 Bestimmung der Durchflussgeschwindigkeit

26 Aussenden eines Ultraschallsignals senkrecht zur Messrohrwand durch ein erstes Wandlerelement

27 Empfang des reflektierten Signals durch das erste Wandlerelement

28 Bestimmung des Reflexionskoeffizienten R

29 Bestimmung der akustischen Impedanz $Z_m$ des Mediums

30 Bestimmung der Dichte $\rho_m$ des Mediums

31 Empfang eines an der inneren Messrohrwand reflektierten Signals sowie eines Signals, das in die gegenüberliegende Messrohrwand eindringt und an dem Übergang der Messrohrwand in den Außenraum reflektiert wird

32 Bestimmung der Dicke der Messrohrwand

**Patentansprüche**

1. Ultraschalldurchflussmessgerät (1), umfassend ein Messrohr (2), ein erstes Ultraschallwandlerarray (3), ein zweites Ultraschallwandlerarray (4) und eine Steuer- und Auswerteeinheit (5),

wobei im Betrieb ein Medium durch das Messrohr (2) fließt,
wobei das erste Ultraschallwandlerarray (3) und das zweite Ultraschallwandlerarray (4) in Strömungsrichtung gesehen beabstandet zueinander an dem Messrohr (2) angeordnet sind, wobei die Steuer- und Auswerteeinheit (5) mit dem ersten Ultraschallwandlerarray (3) und mit zweiten Ultraschallwandlerarray (4) verbunden ist,

wobei in einem ersten Betriebszustand das erste Ultraschallwandlerarray (3) zumindest als Ultraschallerreger zur Anregung einer geführten Ultraschallwelle, die sich im Betrieb durch das Medium ausbereitet, ausgebildet ist und wobei das zweite Ultraschallwandlerarray (4) zumindest als Ultraschallempfänger zum Empfang dieser Ultraschallwelle ausgebildet ist, **dadurch gekennzeichnet**

**dass** das erste Ultraschallwandlerarray (3) eine Mehrzahl von Wandlerelementen (6) aufweist, wobei die Mehrzahl von Wandlerelementen (6) auf einem ersten Messrohrumfang (7) angeordnet ist,

**dass** das zweite Ultraschallwandlerarray (4) eine Mehrzahl Wandlerelementen (6) aufweist, wobei die Mehrzahl von Wandlerelementen (6) auf einem zweiten Messrohrumfang (7) angeordnet ist

und **dass** die Wandlerelemente (6) klein sind im Vergleich zum Messrohrumfang (7).

2. Ultraschalldurchflussmessgerät (1) nach Anspruch 1, **dadurch gekennzeichnet, dass** die Wandlerelemente (6) des ersten Ultraschallwandlerarrays (3) und die Wandlerelemente (6) des zweiten Ultraschallwandlerarrays (4) auf dem äußeren Messrohrumfang angeordnet sind oder dass die dass die Wandlerelemente (6) des ersten Ultraschallwandlerarrays (3) und die Wandlerelemente (6) des zweiten Ultraschallwandlerarrays (4) auf dem inneren Messrohrumfang angeordnet sind.

3. Ultraschalldurchflussmessgerät (1) nach Anspruch 1 oder 2, **dadurch gekennzeichnet, dass** das Messrohr (2) Teil einer bestehenden Rohranlage ist oder dass das Messrohr (2) mit den Rohren einer Rohranlage, beispielsweise über eine Flanschverbindung, verbunden werden kann, oder dass das Messrohr (2) ein Messrohreinsatz ist, der in ein Rohr einer bestehenden Anlage eingesetzt werden kann.

4. Ultraschalldurchflussmessgerät (1) nach einem der Ansprüche 1 bis 3, **dadurch gekennzeichnet, dass** die Wandlerelemente (6) des ersten Ultraschallwandlerarrays (3), vorzugsweise im Wesentlichen äquidistant zueinander, auf einem flexiblen Band (9), das um das Messrohr (2) gelegt ist, angeordnet sind und/oder dass die Wandlerelemente (6) des zweiten Ultraschallwandlerarrays (4), vorzugsweise im Wesentlichen äquidistant zueinander, auf einem flexiblen Band (9), das um das Messrohr (2) gelegt ist, angeordnet sind.

5. Ultraschalldurchflussmessgerät (1) nach einem der Ansprüche 1 bis 4, **dadurch gekennzeichnet, dass** die Wandlerelemente (6) des ersten Ultraschallwandlerarrays (3) im Wesentlichen äquidistant entlang des vollständigen ersten Umfangs (7) des Messrohrs (2) angeordnet sind und/oder dass die Wandlerelemente (6) des zweiten Ultraschallwandlerarrays (4) im Wesentlichen äquidistant entlang des vollständigen zweiten Messrohrumfangs (7) angeordnet sind.

6. Ultraschalldurchflussmessgerät (1) nach einem der Ansprüche 1 bis 5, **dadurch gekennzeichnet, dass** die Wandlerelemente (6) des ersten Ultraschallwandlerarrays (3) auf einer flexiblen Leiterplatte (10) angeordnet sind, die um das Messrohr (2) gelegt ist und/oder dass die Wandlerelemente (6) des zweiten Ultraschallwandlerarrays (4) auf einer flexiblen Leiterplatte (10) angeordnet sind, die um das Messrohr (2) gelegt ist.

7. Ultraschalldurchflussmessgerät (1) nach einem der Ansprüche 1 bis 6, **dadurch gekennzeichnet, dass** das erste Ultraschallwandlerarray (3) wenigstens vier Wandlerelemente (6) umfasst und/oder dass das zweite Ultraschallwandlerarray (4) wenigstens vier Wandlerelemente (6) umfasst.

8. Ultraschalldurchflussmessgerät (1) nach einem der Ansprüche 1 bis 7, **dadurch gekennzeichnet, dass** das erste Ultraschallwandlerarray (3) in einem zweiten Betriebszustand auch als Ultraschallempfänger zum Empfang einer Ultraschallwelle ausgebildet ist und dass das zweite Ultraschallwandlerarray (4) in einem zweiten Betriebszustand auch als Ultraschallerreger zur Anregung einer geführten Ultraschallwelle, die sich im Betrieb durch das Medium ausbereitet, ausgebildet ist.

9. Ultraschalldurchflussmessgerät (1) nach einem der Ansprüche 1 bis 8, **dadurch gekennzeichnet, dass** das erste Ultraschallwandlerarray (3) derart ausgebildet ist, dass in einem dritten Betriebszustand wenigstens ein Wandlerelement (6) als Ultraschallerreger und wenigstens ein Wandlerelement (6) als Ultraschallempfänger ausgebildet ist und/oder dass das zweite Ultraschallwandlerarray (4) derart ausgebildet ist, dass in einem dritten Betriebszustand wenigstens ein Wandlerelement (6) als Ultraschallerreger und wenigstens ein Wandlerelement (6) als Ultraschallempfänger ausgebildet ist.

10. Verfahren (18) zum Betreiben eines Ultraschalldurchflussmessgeräts (1), wobei das Ultraschalldurchflussmessgerät (1) nach einem der Ansprüche 1 bis 9 ausgebildet ist, wobei ein Medium durch das Messrohr (2) fließt,

und wobei in einem ersten Betriebszustand das erste Ultraschallwandlerarray (3) als Ultraschallerreger funktioniert und das zweite Ultraschallwandlerarray (4) als Ultraschallempfänger funktioniert und wobei in einem zweiten Betriebszustand das erste Ultraschallwandlerarray (3) als Ultraschallempfänger funktioniert und das zweite Ultraschallwandlerarray (4) als Ultraschallerreger funktioniert,
**dadurch gekennzeichnet,**
**dass** das Verfahren (18) in einem ersten Betriebszustand die folgenden Schritte umfasst:

- Anregen (19) von wenigstens zwei Wandlerelementen (6) des ersten Ultraschallwandlerarrays (3) derart, dass die Wandlerelemente (6) im Medium eine erste geführte Ultraschallwelle anregen, die sich in Richtung des zweiten Ultraschallwandlerarrays (4) ausbreitet,
- Erfassen (20) der ersten Ultraschallwelle durch wenigstens zwei Wandlerelemente (6) des zweiten Ultraschallwandlerarrays (4), und Weiterleiten der Messsignale der einzelnen Wandlerelemente als erste Messsignale an die Steuer- und Auswerteeinheit,
- Bestimmung (21) der Laufzeit der ersten Ultraschallwelle aus den ersten Messsignalen durch die Steuer- und Auswerteeinheit (5),

und **dass** das Verfahren (18) in einem zweiten Betriebszustand die folgenden Schritte umfasst:

- Anregen (22) von wenigstens zwei Wandlerelementen (6) des zweiten Ultraschallwandlerarrays (4) derart, dass die Wandlerelemente (6) im Medium eine zweite geführte Ultraschallwelle anregen, die sich in Richtung des ersten Ultraschallwandlerarrays (3) ausbreitet,
- Erfassen (23) der zweiten Ultraschallwelle durch wenigstens zwei Wandlerelemente (6) des ersten Ultraschallwandlerarrays (3), und Weiterleiten der Messsignale der einzelnen Wandlerelemente als zweite Messsignale an die Steuer- und Auswerteeinheit,
- Bestimmung (24) der Laufzeit der zweiten Ultraschallwelle aus den zweiten Messsignalen durch die Steuer- und Auswerteeinheit (5) und
- Bestimmung (25) der Durchflussgeschwindigkeit des fließenden Mediums aus dem Laufzeitunterschied der ersten und der zweiten Ultraschallwelle.

11. Verfahren (18) nach Anspruch 10, **dadurch gekennzeichnet, dass** vor der Bestimmung des Laufzeitunterschiedes die aufgrund von Dispersion entstehenden Laufzeiten verschiedener Frequenzanteile einer Ultraschallwelle korrigiert werden.

12. Verfahren (18) nach Anspruch 10 oder 11, **dadurch gekennzeichnet, dass** die Wandlerelemente (6) des als Ultraschallerreger funktionierenden Ultraschallwandlerarrays derart angesteuert werden, dass ein aufgrund von Dispersion zu erwartender Laufzeitunterschied verschiedener Frequenzanteile verringert wird.

13. Verfahren (18) nach einem der Ansprüche 10 bis 12, **dadurch gekennzeichnet, dass** in wenigstens einem weiteren Betriebszustand wenigstens ein Wandlerelement (6) des ersten Ultraschallwandlerarrays (3) als Ultraschallerreger funktioniert und wenigstens ein Wandlerelement (6) des ersten Ultraschallwandlerarrays (3) als Ultraschallempfänger funktioniert, sodass mit dem ersten Ultraschallwandlerarray (3) wenigstens eine Eigenschaft des Mediums und/oder des Messrohrs im Bereich des ersten Messrohrumfangs (7) bestimmt werden kann und/oder
dass in wenigstens einem weiteren Betriebszustand wenigstens ein Wandlerelement (6) des zweiten Ultraschallwandlerarrays (4) als Ultraschallerreger funktioniert und wenigstens ein Wandlerelement (6) des zweiten Ultraschallwandlerarrays als Ultraschallempfänger funktioniert, sodass mit dem zweiten Ultraschallwandlerarray (4) wenigstens eine Eigenschaft des Mediums und/oder des Messrohrs im Bereich des zweiten Messrohrumfangs (7) bestimmt werden kann.

14. Verfahren (18) nach Anspruch 13, **dadurch gekennzeichnet, dass** in dem wenigstens einen weiteren Betriebszustand das wenigstens eine Wandlerelement (6) des ersten Ultraschallwandlerarrays (3) ein Ultraschallsignal senkrecht zur Messrohrwand in das Medium aussendet (26) und anschließend das an der gegenüberliegenden inneren Messrohrwand (13) reflektierte Signal empfängt (27) und dass die Steuer- und Auswerteeinheit (5) unter Berücksichtigung des ausgesendeten Signals und des reflektierten Signals die Dichte des Mediums bestimmt (30),
und/oder
dass in dem wenigstens einen weiteren Betriebszustand das wenigstens eine Wandlerelement (6) des zweiten Ultraschallwandlerarrays (4) ein Ultraschallsignal senkrecht zur Messrohrwand in das Medium aussendet (26) und anschließend das an der gegenüberliegenden inneren Messrohrwand (13) reflektierte Signal empfängt (27) und dass die Steuer- und Auswerteeinheit (5) unter Berücksichtigung des ausgesendeten Signals und des reflektierten Signals die Dichte des Mediums bestimmt (30).

15. Verfahren (18) nach einem der Ansprüche 13 oder 14, **dadurch gekennzeichnet, dass** in dem wenigstens einen weiteren Betriebszustand wenigstens ein Wandlerelement (6) des ersten Ultraschallwandlerarrays (3) ein Ultraschallsignal senkrecht zur Messrohrwand durch die Messrohrwand in das Medium aussendet (26) und anschließend ein an der gegenüberliegenden inneren Messrohrwand (13) reflektiertes Signal sowie ein Signal, das in die gegenüberliegende Messrohrwand eindringt und an dem Übergang der Messrohrwand in den Außenraum reflektiert wird, empfängt (31) und dass die Steuer-und Auswerteeinheit (5) unter Berücksichtigung der Laufzeit der reflektierten Signale die Dicke der Messrohrwand im Bereich des ersten Messrohrumfangs (7) bestimmt (32),
und/oder
dass in dem wenigstens einen weiteren Betriebszustand wenigstens ein Wandlerelement (6) des zweiten Ultraschallwandlerarrays (4) ein Ultraschallsignal senkrecht zur Messrohrwand durch die Messrohrwand in das Medium aussendet (26) und anschließend ein an der gegenüberliegenden inneren Messrohrwand (13) reflektiertes Signal sowie ein Signal, das in die gegenüberliegende Messrohrwand eindringt und an dem Übergang der Messrohrwand in den Außenraum reflektiert wird, empfängt (31) und dass die Steuer- und Auswerteeinheit (5) unter Berücksichtigung der Laufzeit der reflektierten Signale die Dicke der Messrohrwand im Bereich des zweiten Messrohrumfangs (7) bestimmt (32).

16. Verfahren (18) nach einem der Ansprüche 13 bis 15, **dadurch gekennzeichnet, dass** in dem wenigstens einen weiteren Betriebszustand wenigstens ein Wandlerelement (6) des ersten Ultraschallwandlerarrays (3) ein Ultraschallsignal senkrecht zur Messrohrwand durch die Messrohrwand in das Medium aussendet und das gegenüberliegende Wandlerelement (6) das durch das Medium transmittierte Ultraschallsignal empfängt und dass die Steuer- und Auswerteeinheit (5) unter Berücksichtigung der Übergänge zwischen der Messrohrwand und dem Medium und eventuell vorhandenen akustischen Kopplungsschichten (11) die Schallgeschwindigkeit des Mediums bestimmt, und/oder
dass in dem wenigstens einen weiteren Betriebszustand wenigstens ein Wandlerelement (6) des zweiten Ultraschallwandlerarrays (4) ein Ultraschallsignal senkrecht zur Messrohrwand durch die Messrohrwand in das Medium aussendet und das gegenüberliegende Wandlerelement (6) das durch das Medium transmittierte Ultraschallsignal empfängt und dass die Steuer- und Auswerteeinheit (6) unter Berücksichtigung der Übergänge zwischen der Messrohrwand und dem Medium und eventuell vorhandenen akustischen Kopplungsschichten (11) die Schallgeschwindigkeit des Mediums bestimmt.

Fig. 1

Fig. 2

Fig. 3

Fig. 4

Fig. 5

Fig. 6

Fig. 7

Fig. 8

```
┌──────┐
│  26  │
└──────┘
    │
┌──────┐
│  27  │
└──────┘
    │
┌──────┐
│  28  │
└──────┘
    │
┌──────┐
│  29  │
└──────┘
    │
┌──────┐
│  30  │
└──────┘
```

Fig. 9

```
┌──────┐
│  26  │
└──────┘
    │
┌──────┐
│  31  │
└──────┘
    │
┌──────┐
│  32  │
└──────┘
```

Fig. 10

## EUROPÄISCHER RECHERCHENBERICHT

Europäisches Patentamt
European Patent Office
Office européen des brevets

Nummer der Anmeldung

EP 26 15 1984

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2018 125923 A1 (ROSEN SWISS AG [CH]) 23. April 2020 (2020-04-23) * Absätze [0009], [0023], [0028], [0051], [0066], [0073] - [0090], [0091], [0096], [0101] - [0103] - Absätze [0109] - [0112], [0117] - [0123]; Abbildungen 1, 11, 12, 15, 16, 17 * ----- | 1-10,13, 14,16 | INV. G01F1/66 G01F1/667 |
| X,D | MASSAAD JACK ET AL: "Measurement of Pipe and Fluid Properties With a Matrix Array-Based Ultrasonic Clamp-On Flow Meter", IEEE TRANSACTIONS ON ULTRASONICS, FERROELECTRICS, AND FREQUENCY CONTROL, Bd. 69, Nr. 1, 1. Januar 2022 (2022-01-01) , Seiten 309-322, XP093403031, USA ISSN: 0885-3010, DOI: 10.1109/tuffc.2021.3111710 * Seite 309 - Seite 320 * ----- | 1-3, 7-13,15, 16 | |
| A | US 2020/088686 A1 (SINHA DIPEN N [US] ET AL) 19. März 2020 (2020-03-19) * das ganze Dokument * ----- | 1-16 | RECHERCHIERTE SACHGEBIETE (IPC) G01F G01N |

Der vorliegende Recherchenbericht wurde für alle Patentansprüche erstellt

| Recherchenort | Abschlußdatum der Recherche | Prüfer |
|---|---|---|
| Den Haag | 4. Juni 2026 | Myrillas, K |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 26 15 1984

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-06-2026

| Im Recherchenbericht angeführtes Patentdokument | Datum der Veröffentlichung | Mitglied(er) der Patentfamilie | | Datum der Veröffentlichung |
|---|---|---|---|---|
| DE 102018125923 A1 | 23-04-2020 | CA | 3116799 A1 | 23-04-2020 |
| | | DE | 102018125923 A1 | 23-04-2020 |
| | | EP | 3867636 A2 | 25-08-2021 |
| | | US | 2021381866 A1 | 09-12-2021 |
| | | WO | 2020078833 A2 | 23-04-2020 |
| US 2020088686 A1 | 19-03-2020 | US | 2020088686 A1 | 19-03-2020 |
| | | WO | 2018175503 A2 | 27-09-2018 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10365137 B2

**In der Beschreibung aufgeführte Nicht-Patentliteratur**

- **VON JACK MASSAAD** ; **PAUL L.M.J. VAN NEER** ; **DOUWE M. VAN WILLINGEN** ; **NICOLAAS DE JONG** ; **MICHIEL A.P. PERTIJS** ; **MARTIN D. VERWEIJ**. Measurement of Pipe and Fluid Properties with a Matrix Array-Based Ultrasonic Clamp-On Flow Meter. *IEEE Transactions on ultrasonics, ferroelectrics, and frequency control*, January 2022, vol. 69 (1)